# EUROPÄISCHE PATENTSCHRIFT

(11) **EP 1 801 548 B1**
(45) Veröffentlichungstag und Bekanntmachung des Hinweises auf die Patenterteilung: **14.02.2018**
(21) Anmeldenummer: 06125919.8
(22) Anmeldetag: 12.12.2006
(51) Int. Cl.: G01K 7/16, G01K 13/02, G01F 1/692

(54) **Vorrichtung zur Messung und/oder Überwachung der Temperatur und/oder des Durchflusses eines Mediums**
Device for measuring and/or monitoring the temperature and/or the flow rate of a fluid
Dispositif de mesure et/ou de monitorage de la température et/ou du débit d'un fluide

(30) Priorität: 21.12.2005 DE 102005061703
(43) Veröffentlichungstag der Anmeldung: 27.06.2007
(73) Patentinhaber: Innovative Sensor Technology IST AG, 9642 Ebnat-Kappel (CH)
(72) Erfinder: Marxer, Marcel, 9630, Wattwil (CH); Holoubek, Jiri, 9630, Wattwil (CH)
(74) Vertreter: Andres, Angelika Maria

(56) Entgegenhaltungen:
- EP-A- 0 353 996
- EP-A- 1 348 937
- DE-A1- 10 208 533
- DE-A1- 19 934 110
- JP-A- H04 265 828

## Beschreibung

Die Erfindung bezieht sich auf eine Vorrichtung zur Messung und/oder Überwachung mindestens einer Prozessgröße. Bei der Prozessgröße handelt es sich um die Temperatur oder den Durchfluss eines Mediums. Das Medium selbst ist beispielsweise ein Schüttgut, ein beliebiges Fluid, eine Flüssigkeit oder auch ein Gas oder eine Mischung.

Im Stand der Technik ist es beispielsweise bekannt, den Durchfluss eines Mediums thermisch zu bestimmen, indem eine Heizeinheit und eine Temperaturmesseinheit verwendet werden. Durch den Durchfluss des Mediums kommt es zu einer gewissen Abkühlung der Heizeinheit, so dass beispielsweise die Heizleistung erhöht werden muss, um einen einstellbaren Temperaturwert zu erhalten. Die Temperaturmesseinheit dient dazu, die Temperatur des Mediums zu bestimmen, so dass gezielt nur die Abkühlung durch die Strömung berechnet werden kann. Ein solcher Temperatursensor oder allgemein Temperatursensoren sollten für genaue Messungen möglichst von Störeinflüssen thermisch entkoppelt sein. Bei der thermischen Durchflussmessung ist es somit insbesondere erforderlich, dass der Temperatursensor von der Heizeinheit thermisch entkoppelt ist. Dies ist umso wichtiger, wenn der Temperatursensor und/oder die Heizeinheit mit einer Dünnschichttechnik erzeugt worden sind. Vor allem ist dies wichtig, wenn beide Elemente, also Sensor und Heizeinheit, durch ein Substrat miteinander verbunden sind. Dieser Problematik wird im Stand der Technik (EP 0 353 996) dadurch begegnet, dass als Trägerelement oder als Trägerschicht Zirkonoxid verwendet wird. Trägerschichten aus Zirkonoxid sind zudem aus JP 04 265 828 A, DE 102 08 533 A1 und DE 199 34 110 A1 bekannt.

Es hat sich gezeigt, dass Temperatursensoreinheiten mit einer Trägerschicht aus Zirkonoxid ab einer gewissen höheren Temperatur ausfallen oder zerstört werden.

Die Aufgabe der Erfindung besteht daher darin, eine Anwendung einer Messvorrichtung auch bei höheren Temperaturen bzw. bei höheren Temperaturdifferenzen zwischen den verschiedenen Elementen der Messvorrichtung zu ermöglichen. Diese Aufgabe löst die Erfindung mit einer Messvorrichtung und einem Verfahren zur Herstellung einer entsprechenden Sensoreinheit. Die Sensoreinheit ist dabei ggf. auch ein Teil der Messvorrichtung oder mit dieser vollständig identisch.

Die Erfindung löst die Aufgabe durch eine Vorrichtung zur Messung und/oder Überwachung mindestens einer Prozessgröße, wobei mindestens eine im Wesentlichen thermisch isolierende Trägerschicht, welche zumindest teilweise aus Zirkonoxid besteht, vorgesehen ist, wobei auf und/oder in der Trägerschicht mindestens eine im Wesentlichen elektrisch isolierende Zwischenschicht aufgebracht ist, und wobei auf und/oder in der Zwischenschicht mindestens eine in Bezug auf die Messung der Prozessgröße aktive Schicht aufgebracht ist. Die Erfindung beinhaltet, dass die aktive Schicht, d.h. insbesondere dass die die Temperatur messende Schicht auf einer elektrisch isolierenden Zwischenschicht aufgebracht ist, welche selbst wiederum auf der thermisch isolierenden Schicht ruht. Die Erfindung beinhaltet weiterhin, dass unterhalb der Trägerschicht eine zusätzliche Schicht aus dem Material der Zwischenschicht aufgebracht ist, so dass die Trägerschicht zu beiden Seiten vom Material der Zwischenschicht umgeben ist. Die einzelnen Schichten sind in einer Ausgestaltung voneinander getrennt. In einer weiteren Ausgestaltung ist die elektrisch isolierende Zwischenschicht zumindest teilweise ein Bestandteil der Trägerschicht. In einer zusätzlichen Ausgestaltung ist die Zwischenschicht eine Art elektrisch isolierende Dotierung in der Trägerschicht. Eine Schwierigkeit der im Stand der Technik bestehenden Sensoreinheiten bzw. insbesondere der auf der Dünnschichttechnik beruhenden Temperatursensoren besteht darin, dass die thermisch isolierende Schicht ab einer gewissen Temperatur eine Eigenleitfähigkeit entwickelt, so dass die für die Messung aktive Schicht mit den darunter befindlichen Schichten oder Bauteilen elektrisch leitend verbunden wird. Dies wird in der Erfindung durch die Zwischenschicht verhindert, welche somit auch die Anwendung der Messvorrichtung bei hohen Temperaturen und/oder bei hohen Temperaturdifferenzen erlaubt.

Die erfindungsgemäße Vorrichtung ist in Anspruch 1 definiert. Eine Ausgestaltung der erfindungsgemäßen Vorrichtung sieht vor, dass mindestens eine Temperaturmesseinheit vorgesehen ist, und dass die Temperaturmesseinheit mindestens die in Bezug auf die Messung der Prozessgröße aktive Schicht aufweist, welche der Messung der Temperatur dient. In einer Ausgestaltung dient die aktive Schicht der Messung der Temperatur und ist Teil einer Temperaturmesseinheit oder eines Temperatursensors. Viele Temperaturmesseinheiten oder -sensoren werden mit Dünnschichtverfahren hergestellt. Dabei handelt es sich entweder um reine Temperaturmesseinheiten oder beispielsweise um Teile von Durchflussmesseinheiten.

Eine Ausgestaltung der erfindungsgemäßen Vorrichtung beinhaltet, dass es sich bei der Prozessgröße um den Durchfluss eines Mediums handelt, dass mindestens eine Heizeinheit vorgesehen ist, und dass mindestens eine Auswerte-/Regeleinheit vorgesehen ist, welche mit der Temperaturmesseinheit und der Heizeinheit verbunden ist, und welche mindestens den Durchfluss des Mediums bestimmt. Die in der vorherigen Ausgestaltung genannte Temperaturmesseinheit ist dann Teil eines thermischen Durchflussmessgerätes, bei welchem es insbesondere erforderlich ist, dass eine thermische Entkopplung zwischen dem Temperatursensor und der Heizeinheit gegeben ist. Die Auswerte-/Regeleinheit ist dabei entweder ein Teil des Messgerätes oder Teil einer damit verbundenen Einheit, z.B. einer Leitwarte.

Eine Ausgestaltung ist derart, dass mindestens eine Heizeinheit vorgesehen ist, und dass die Heizeinheit mindestens die in Bezug auf die Messung der Prozessgröße aktive Schicht aufweist, welche der Erzeugung einer Temperatur dient. Die Prozessgröße äußert sich in einer Abkühlung der Heizeinheit, welche entweder direkt gemessen wird oder welche sich durch eine Erhöhung der für die Erzielung einer einstellbaren Temperatur erforderlichen Heizleistung äußert. Aus der Abkühlung lässt sich sodann beispielsweise der Massendurchfluss des Mediums oder die Dichte des Mediums bestimmen. In diesen Ausgestaltungen, welche ggf. auch Temperatursensoren mit jeweils ihren eigenen aktiven Schichten beinhalten, ist somit die aktive Schicht ein Teil der Heizeinheit.

Die Trägerschicht der erfindungsgemäßen Vorrichtung besteht zumindest teilweise aus Zirkonoxid. Zirkonoxid hat viele Vorteile für die Anwendung. Zirkonoxid hat eine tiefe thermische Leitfähigkeit und hohe mechanische Stabilität. Weiterhin sind sehr dünne Substrate erhältlich bzw. sind aus Zirkonoxid sehr dünne Schichten herstellbar, so dass jeweils die thermische Masse insgesamt gering ist.

Eine Ausgestaltung der erfindungsgemäßen Vorrichtung beinhaltet, dass die Zwischenschicht zumindest teilweise aus einem Glas besteht. Glas weist thermische Stabilität auf, wirkt elektrisch isolierend und es sind insbesondere auch siebdruckfähige Pasten erhältlich. Es sind jedoch auch andere Materialen verwendbar.

Eine Ausgestaltung der erfindungsgemäßen Vorrichtung sieht vor, dass auf der in Bezug auf die Messung der Prozessgröße aktiven Schicht mindestens eine Passivierungsschicht aufgebracht ist. Eine Passivierungsschicht dient dazu, dass das Medium nicht die aktive Schicht angreift, so dass also die aktive Schicht geschützt wird. Weiterhin schützt die Passivierung vor mechanischer Beschädigung und stellt auch eine elektrische Isolierung zum Medium dar.

Eine Ausgestaltung der erfindungsgemäßen Vorrichtung beinhaltet, dass mindestens die in Bezug auf die Messung der Prozessgröße aktive Schicht mit einer Dünnschichttechnik, insbesondere Sputtern oder Aufdampfen, einer Dickschichttechnik oder einer Bedrucktechnik hergestellt ist. In einer weiteren Ausgestaltung ist auch zumindest die Zwischenschicht mit einer Dünnschichttechnik oder einer Dickschichttechnik hergestellt.

Die Erfindung wird anhand der nachfolgenden Zeichnungen näher erläutert. Es zeigt:
Fig. 1: einen schematischen Aufbau einer Sensoreinheit gemäß dem Stand der Technik,
Fig. 2: einen schematischen Aufbau einer Sensoreinheit, und
Fig. 3: eine schematische Darstellung einer Messvorrichtung zur Messung des Durchflusses eines Mediums.

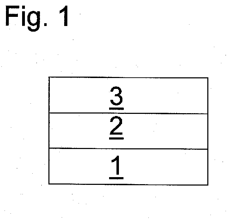

In der Fig. 1 ist schematisch ein Schnitt durch den wesentlichen Teil einer Sensoreinheit dargestellt. Die Darstellung ist dabei nicht maßstabsgerecht. Auf einer Trägerschicht 1, welche beispielsweise zumindest teilweise aus Zirkonoxid besteht, ist die in Bezug auf die Messung der Prozessgröße aktive Schicht 2 aufgebracht. Dabei handelt es sich beispielsweise um eine mit einer Dünnschichttechnik erzeugte Struktur, deren elektrischer Widerstand von der Temperatur des Mediums abhängt. Aus der Messung der Temperatur kann dann beispielsweise auf den Durchfluss des Mediums geschlossen werden, insofern es sich bei dem Messgerät um ein thermisches Durchflussmessgerät handelt. Oberhalb der aktiven Schicht 2 ist eine Passivierungsschicht 3 als Schutz für die aktive Schicht 2 aufgebracht.

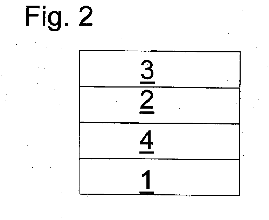

Die Fig. 2 zeigt einen zur Fig. 1 entsprechenden Schnitt durch einen Aufbau. Hierbei befindet sich zwischen der Trägerschicht 1, welche beispielsweise eine Keramik ist, und der aktiven Schicht 2 eine Zwischenschicht 4, welche im Wesentlichen elektrisch isolierend wirkt. Handelt es sich bei der Trägerschicht 1 insbesondere um ein Material, welches ab einer gewissen Temperatur eigenleitfähig wird, so wird der elektrische Kontakt zwischen der Trägerschicht 1 und der aktiven Schicht 2 durch die elektrisch isolierende Zwischenschicht 4, welche beispielsweise teilweise ein Glas ist, unterbunden. In einer weiteren Ausgestaltung wird die Zwischenschicht 4 zumindest teilweise in die Trägerschicht 1 eingebracht. Erfindungsgemäß ist eine zusätzliche Schicht aus dem Material der Zwischenschicht 4 auch unterhalb der Trägerschicht 1 angebracht, d.h. die Trägerschicht 1 ist zu beiden Seiten jeweils vom Material der Zwischenschicht 4 umgeben (ohne Abbildung). Diese symmetrischen Ausgestaltungen dienen dazu, thermische Spannungen auszugleichen, d.h. es wird ein Verbiegen aufgrund unterschiedlicher Ausdehnungskoeffizienten verhindert.

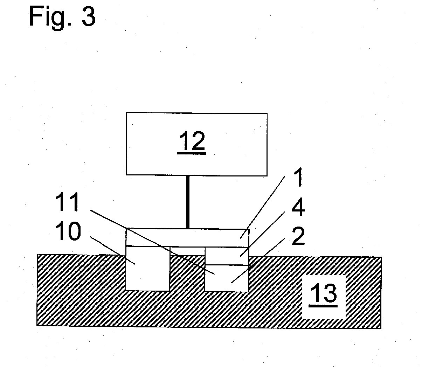

In der Fig. 3 ist ein thermisches Durchflussmessgerät als Beispiel eines Messgerätes dargestellt. Von der Auswerte-/Regeleinheit 12 werden ein Heizelement 11 und ein Temperatursensor 10 gesteuert bzw. werden die entsprechenden Messwerte empfangen und ausgewertet. Der Temperatursensor 10 und das Heizelement 11 sind hier auf der Trägerschicht oder dem Trägermaterial 1 aufgebracht. Durch die Trägerschicht 1 aus Zirkonoxid wird eine thermische Trennung zwischen der Heizeinheit 11 und dem Sensorelement 10 hergestellt. Die elektrische Trennung durch eine Zwischenschicht 4 ist insbesondere zwischen dem Trägermaterial Zirkonoxid 1 und dem Heizelement 11, die hier die aktive Schicht 2 ist, erforderlich, da es durch die Heiztätigkeit zu lokaler Erwärmung und somit zu höheren Temperaturen kommt. In einer Ausgestaltung ist das Messgerät - nicht speziell auf eine Prozessgröße festgelegt - auf einem Chip aufgebracht, auf welchem die Zirkonoxidschicht 1 aufgebracht ist, oder von welchem die Trägerschicht 1 ein Bestandteil ist.

### Bezugszeichenliste

**Tabelle 1**

| | |
|---|---|
| 1 | Trägerschicht |
| 2 | Aktive Schicht |
| 3 | Passivierungsschicht |
| 4 | Zwischenschicht |
| 10 | Temperaturmesseinheit |
| 11 | Heizeinheit |
| 12 | Auswerte-/Regeleinheit |
| 13 | Medium |

## Patentansprüche

1. Vorrichtung zur Messung und/oder Überwachung der Temperatur und/oder des Durchflusses eines Mediums,
mit einer im Wesentlichen thermisch isolierenden Trägerschicht (1), welche zumindest teilweise aus Zirkonoxid besteht,
und mit mindestens einer Temperaturmesseinheit (10),
wobei auf und/oder in die Trägerschicht (1) mindestens eine im Wesentlichen elektrisch isolierende Zwischenschicht (4) aufgebracht ist, und wobei die Temperaturmesseinheit (10) in Form einer aktiven Schicht, welche der Messung der Temperatur dient, auf die Zwischenschicht (4) aufgebracht oder in die Zwischenschicht (4) eingebracht ist, **dadurch gekennzeichnet,**
**dass** unterhalb der Trägerschicht (1) eine zusätzliche Schicht aus dem Material der Zwischenschicht (4) aufgebracht ist, so dass die Trägerschicht (1) zu beiden Seiten vom Material der Zwischenschicht (4) umgeben ist.

2. Vorrichtung nach Anspruch 1,
**dadurch gekennzeichnet,**
**dass** die Vorrichtung mindesten eine Heizeinheit (11) aufweist,
und **dass** die Vorrichtung mindestens eine Auswerte-/Regeleinheit (12) aufweist,
welche mit der Temperaturmesseinheit (10) und der Heizeinheit (11) verbunden ist, und welche mindestens den Durchfluss des Mediums (13) bestimmt.

3. Vorrichtung nach Anspruch 1,
**dadurch gekennzeichnet,**
**dass** die Vorrichtung eine Heizeinheit (11) aufweist, und dass die Heizeinheit (11) in Form einer aktiven Schicht auf die Zwischenschicht (4) aufgebracht oder in die Zwischenschicht (4) eingebracht ist.

4. Vorrichtung nach Anspruch 1,
**dadurch gekennzeichnet,**
**dass** die Zwischenschicht (4) zumindest teilweise aus einem Glas besteht.

5. Vorrichtung nach Anspruch 1 oder 3,
**dadurch gekennzeichnet,**
**dass** auf die Temperaturmesseinheit (10) und/oder die Heizeinheit (11) mindestens eine Passivierungsschicht (3) aufgebracht ist.

6. Vorrichtung nach Anspruch 1 oder 3,
**dadurch gekennzeichnet,**
**dass** mindestens die Temperaturmesseinheit (10) und/oder die Heizeinheit (11) mit einer Dünnschichttechnik, insbesondere Sputtern oder Aufdampfen, einer Dickschichttechnik oder einer Bedrucktechnik hergestellt sind.

7. Vorrichtung nach Anspruch 1 oder 3,
**dadurch gekennzeichnet,**
**dass** die Zwischenschicht (4) im Wesentlichen nur auf einem Bereich oder nur auf Bereiche aufgebracht ist, oberhalb dessen oder deren die Temperaturmesseinheit (10) und/oder die Heizeinheit (11) aufgebracht sind/ist.

## Claims

1. Apparatus for measuring and/or monitoring the temperature and/or the flow of a medium,
with an essentially thermally insulating carrier layer (1), which at least partially consists of zirconium oxide,
and with at least one temperature measuring unit (10),
wherein at least one essentially electrically insulating intermediate layer (4) is applied to and/or in the carrier layer (1),
and wherein the temperature measuring unit (10) is applied on the intermediate layer (4) or in the intermediate layer (4) in the form of an active layer which is used to measure the temperature,
**characterized in that**
an additional layer made from the material of the intermediate layer (4) is applied beneath the carrier layer (1) such that the carrier layer is surrounded by the material of the intermediate layer (4) on both sides.

2. Apparatus as claimed in Claim 1,
**characterized in that**
the apparatus has at least one heating unit (11),
and **in that** the apparatus has at least one evaluation/control unit (12), which is connected to the temperature measuring unit (10) and the heating unit (11), and which at least determines the flow of the medium (13).

3. Apparatus as claimed in Claim 1,
**characterized in that**
the apparatus has a heating unit (11), and **in that** the heating unit (11) is applied on or in the intermediate layer (4) in the form of an active layer.

4. Apparatus as claimed in Claim 1,
**characterized in that**
the intermediate layer (4) is at least partially made from a glass.

5. Apparatus as claimed in Claim 1 or 3,
**characterized in that**
at least a passivation layer (3) is applied to the temperature measuring unit (10) and/or the heating unit (11).

6. Apparatus as claimed in Claim 1 or 3,
**characterized in that**
at least the temperature measuring unit (10) and/or the heating unit (11) are produced using a thin-film technology, particularly sputtering or vapor deposition, a thick-layer technology or a printing technology.

7. Apparatus as claimed in Claim 1 or 3,
**characterized in that**
the intermediate layer (4) is essentially only applied to one area or only to areas over which the temperature measuring unit (10) and/or the heating unit (11) is/are applied.

## Revendications

1. Dispositif destiné à la mesure et/ou à la surveillance de la température et/ou du débit d'un produit,
avec une couche support (1) pour l'essentiel thermiquement isolante, qui se compose au moins partiellement d'oxyde de zircone,
et avec au moins une unité de mesure de température (10),
pour lequel au moins une couche intermédiaire (4) pour l'essentiel électriquement isolante est appliquée sur et/ou dans la couche support (1),
et pour lequel l'unité de mesure de température (10) est appliquée sur la couche intermédiaire (4) ou dans la couche intermédiaire (4), sous la forme d'une couche active, laquelle sert à la mesure de la température,
**caractérisé**
**en ce qu'**est appliquée, sous la couche support (1), une couche supplémentaire du même matériau que la couche intermédiaire (4), si bien que la couche support (1) est entourée des deux côtés par le matériau de la couche intermédiaire (4).

2. Dispositif selon la revendication 1,
**caractérisé**
**en ce que** le dispositif comporte au minimum une unité de chauffage (11),
et **en ce que** le dispositif comporte au minimum une unité d'exploitation / de régulation (12), laquelle est reliée avec l'unité de mesure de température (10) et l'unité de chauffage (11), et laquelle détermine au minimum le débit du produit (13).

3. Dispositif selon la revendication 1,
**caractérisé**
**en ce que** le dispositif comporte une unité de chauffage (11), et en ce que l'unité de chauffage (11) est appliquée sur la couche intermédiaire ou dans la couche intermédiaire (4) sous la forme d'une couche active.

4. Dispositif selon la revendication 1,
**caractérisé**
**en ce que** la couche intermédiaire (4) est constituée au moins partiellement d'un verre.

5. Dispositif selon la revendication 1 ou 3,
**caractérisé**
**en ce qu'**est appliquée au moins une couche de passivation (3) sur l'unité de mesure de température (10) et/ou l'unité de chauffage (11).

6. Dispositif selon la revendication 1 ou 3,
**caractérisé**
**en ce qu'**au minimum l'unité de mesure de température (10) et/ou l'unité de chauffage (11) sont fabriquées avec une technique en couche mince, notamment par pulvérisation ou évaporation, une technique en couche épaisse ou une technique d'impression.

7. Dispositif selon la revendication 1 ou 3,
**caractérisé**
**en ce que** la couche intermédiaire (4) est appliquée pour l'essentiel uniquement sur une zone ou uniquement sur des zones, au-dessus de laquelle ou desquelles l'unité de mesure de température (10) et/ou l'unité de chauffage (11) est/sont appliquée(s).
